# FASCICULE DE BREVET EUROPEEN

(11) **EP 0 659 134 B1**
(45) Date de publication et mention de la délivrance du brevet: **27.12.1996**
(21) Numéro de dépôt: 93919404.9
(22) Date de dépôt: 27.08.1993
(51) Int. Cl.: B60T 13/57, B60T 13/569

(54) **SERVOMOTEUR PNEUMATIQUE**
PNEUMATISCHER KRAFTVERSTÄRKER
PNEUMATIC SERVOMOTOR

(30) Priorité: 21.09.1992 FR 9211224
(43) Date de publication de la demande: 28.06.1995
(73) Titulaire: ALLIEDSIGNAL EUROPE SERVICES TECHNIQUES, 93700 Drancy (FR)
(72) Inventeur: GAUTIER, Jean-Pierre, F-93600 Aulnay-sous-Bois (FR); VERBO, Ulysse, F-93600 Aulnay-sous-Bois (FR); PEREZ REVILLA, Miguel, F-95100 Argenteuil (FR)
(74) Mandataire: Bentz, Jean-Paul
(86) Numéro de dépôt international: FR9300831
(87) Numéro de publication internationale: WO9406660

(56) Documents cités:
- DE-A- 3 445 118
- FR-A- 2 537 524

## Description

La présente invention concerne les servomoteurs pneumatiques, et plus particulièrement du type de ceux qui sont utilisés pour fournir une assistance au freinage des véhicules automobiles.

Des servomoteurs de ce type comprennent de façon classique une enveloppe à l'intérieur de laquelle se trouve un piston formé d'un moyeu et d'une jupe et qui définit une chambre avant reliée en permanence à une source de dépression et une chambre arrière reliée sélectivement à la chambre avant ou à l'atmosphère par un moyen de valve actionné par une tige de commande susceptible de s'appuyer, par l'intermédiaire de la face avant d'un plongeur sur la face arrière d'un disque de réaction solidaire d'une tige de poussée, un ressort de rappel de la tige de commande étant disposé entre le piston et le plongeur, le moyen de valve comportant un clapet coopérant avec un premier siège de valve circulaire formé sur le plongeur et un second siège de valve circulaire formé sur le piston, le clapet étant formé d'une membrane souple fixée de façon étanche par son bord périphérique extérieur au piston.

De tels servomoteurs, tels qu'illustrés par exemple par le document EP-A- 0 004 477, présentent plusieurs inconvénients. C'est ainsi que, pour éviter que la tige de commande n'ait une course morte trop longue, on est obligé de concevoir le moyen de valve de façon telle que la "levée de clapet" entre le clapet et le premier siège de valve soit la plus faible possible. Il s'ensuit donc que, lors du freinage, le passage offert à l'air atmosphérique vers la chambre arrière est réduit, de même que le passage offert à l'air de la chambre arrière vers la chambre avant lors du défreinage.

Un inconvénient dû à ces passages d'air réduits et turbulents réside dans le fait que l'air se trouve fortement ralenti dans ses différents mouvements entre l'atmosphère, la chambre arrière et la chambre avant, et donc que les servomoteurs présentent des temps de réponse importants.

De plus, le fonctionnement de ces servomoteurs est accompagné de bruits d'aspiration d'air, qui peuvent devenir gênants, d'autant plus que la structure du moyeu du piston, présentant un seul passage radial vers la chambre arrière et un seul passage axial vers la chambre avant, induit en plus des turbulences importantes dans l'air en mouvement.

Un autre inconvénient majeur des servomoteurs connus réside dans le fait que l'élément de clapet annulaire présente une forme générale tronconique avec un bourrelet extérieur pour son montage, en association avec le support d'élément de le clapet, dans le moyeu tubulaire de l'ensemble de piston, la partie active de l'élément de clapet étant reliée à ce bourrelet de montage par un voile mince s'évasant vers l'extérieur pour son raccordement au bourrelet de montage. Dans un tel agencement, l'élément de voile intermédiaire de l'élément de clapet est soumis, lors de la vie utile du servomoteur, à de très nombreuses sollicitations en flexion et en compression pouvant induire à la longue une fragilisation, à cet endroit, du matériau élastomère constitutif de l'élément de clapet.

De plus, en fonctionnement, cette partie de voile intermédiaire de l'élément de clapet est soumise à une différentielle de pression entre l'atmosphère régnant en permanence à l'intérieur du moyeu tubulaire, autour de la tige d'entrée, et le vide régnant en permanence dans la chambre annulaire entourant cette partie de voile intermédiaire de l'élément de clapet et reliée en permanence à la chambre avant, ou chambre à dépression du servomoteur. Cette différentielle de pression, outre qu'elle contribue à la fatigue de la partie de voile intermédiaire, induit sur la partie active de l'élément de clapet une force axiale s'ajoutant à la force du ressort de valve et que doit vaincre le plongeur de valve lors de chaque phase de relâchement du freinage pour dégager la partie active de l'élément de clapet du premier siège de clapet formé dans le moyeu et rétablir la communication entre la chambre de travail arrière du servomoteur et la chambre de dépression, ce qui impose un surdimensionnement du ressort de rappel de la tige d'entrée se traduisant notamment par un effort important à fournir par le conducteur pour la mise en oeuvre du servomoteur, cet effort étant connu dans la technique sous le terme "d'effort d'attaque".

De même, le plongeur présente une surface, correspondant à l'aire définie par le premier siège de valve circulaire formé sur lui, soumise à la même différentielle de pression, induisant également une force axiale, que doit également vaincre le ressort de rappel de la tige d'entrée, augmentant encore l'effort d'attaque.

Le document FR-A-2 537 524, correspondant au préambule de la revendication principale, essaie d'apporter une solution à ces inconvénients, mais comporte encore un moyen de valve classique logé dans la partie centrale tubulaire formée à l'arrière de l'enveloppe du servomoteur, coopérant avec un plongeur modifié, présentant une surface importante soumise à la différentielle de pression et exigeant donc un effort d'attaque important. De plus, selon ce document, non seulement l'enveloppe du servomoteur doit être de conception spéciale, mais encore la structure du moyeu de piston présente un seul passage radial vers la chambre arrière et un seul passage axial vers la chambre avant, induisant également des turbulences importantes dans l'air en mouvement, nuisibles pour le temps de réponse du servomoteur par le ralentissement de l'air qu'elles imposent, et génératrices de bruits de fonctionnement.

Les servomoteurs connus présentent ainsi, de manière générale, des surfaces non négligeables soumises en permanence à une différentielle de pression, conduisant à des efforts d'attaque et des efforts de retour importants. De plus, ces efforts sont variables en fonction de la différence des pressions régnant dans le servomoteur. C'est ainsi qu'un même servomoteur installé sur des véhicules différents aura des caractéristiques différentes, et qu'on est obligé de prévoir en fabrication autant de réglages de servomoteurs qu'il y aura des modèles de véhicules à équiper, ce qui alourdit considérablement la gestion de la fabrication, du stockage et de l'expédition des servomoteurs. C'est ainsi également qu'un servomoteur aura des caractéristiques sensiblement différentes selon que le véhicule qu'il équipe se trouve au niveau de la mer ou en altitude.

La présente invention a par conséquent pour objet de prévoir un servomoteur dont le fonctionnement soit silencieux, dont le temps de réponse soit le plus faible possible, où les moyens de valve ne posent aucun problème de longévité et où l'effort d'attaque soit constant quelles que soient les conditions d'utilisation, et puisse être réglé pratiquement à toute valeur désirée, et ce de façon simple, fiable et économique en utilisant une enveloppe de servomoteur de conception classique. Le saut d'un tel servomoteur doit également pouvoir être ajusté de façon simple sans démonter le servomoteur.

Dans ce but, l'invention a pour objet un servomoteur dans lequel les passages d'air entre l'atmosphère et la chambre arrière d'une part, la chambre arrière et la chambre avant d'autre part, aient la plus grande section possible sans présenter d'obstacles pouvant engendrer des turbulences, et dans lequel le moyen de valve ainsi que le plongeur présentent une surface aussi réduite que possible, et pouvant même être nulle, soumise à la différentielle de pression.

Selon l'invention, la membrane souple formant le clapet est reliée de façon étanche par son bord périphérique intérieur à la partie avant d'une pièce rigide, dont la partie tubulaire arrière coulisse de façon étanche dans une partie tubulaire arrière du piston.

De façon avantageuse, le diamètre extérieur de la partie tubulaire rigide du clapet est sensiblement égal au diamètre du premier siège de valve circulaire formé sur le plongeur.

Selon des caractéristiques également avantageuses, le plongeur est formé avec une partie avant tubulaire coulissant de façon étanche dans le piston, le diamètre extérieur de cette partie avant tubulaire est sensiblement égal au diamètre du premier siège de valve circulaire formé sur le plongeur, de sorte que les diamètres extérieurs de la partie avant tubulaire du plongeur et de la partie tubulaire rigide du clapet sont sensiblement égaux.

D'autres caractéristiques, buts et avantages de la présente invention ressortiront clairement de la description qui suit d'un mode de réalisation de l'invention donné à titre d'exemple non limitatif en référence aux dessins sur lesquels :
- La Figure 1 est une vue de côté, en demi coupe longitudinale, représentant la partie centrale arrière d'un servomoteur pneumatique d'assistance au freinage réalisé conformément à la présente invention, et
- La Figure 2 est une vue analogue à celle de la Figure 1, représentant la partie centrale arrière d'un servomoteur pneumatique d'assistance au freinage réalisé conformément à une variante de la présente invention.

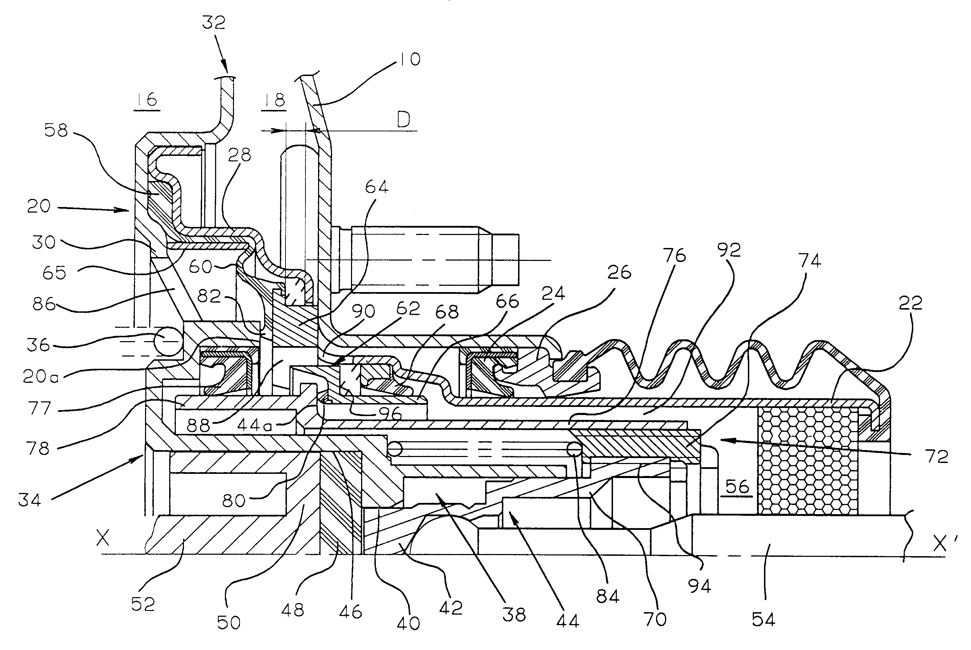

La Figure 1 représente une partie d'un servomoteur d'assistance au freinage prévu pour être placé de façon habituelle entre la pédale de frein d'un véhicule et le maître-cylindre commandant le circuit de freinage hydraulique de ce véhicule. Par convention, on appelle avant du servomoteur la partie de ce dernier tournée vers le maître-cylindre et arrière du servomoteur la partie tournée vers la pédale de frein.

Le servomoteur de la Figure 1 comprend une enveloppe extérieure 10 en forme de coquille, présentant une symétrie de révolution autour d'un axe X-X'. Seule la partie centrale arrière de cette enveloppe 10 est représentée sur la Figure.

L'intérieur de l'espace délimité par l'enveloppe 10 est divisé en une chambre avant 16 ou chambre à dépression et une chambre arrière 18 ou chambre de travail par une structure de piston, désignée dans son ensemble par la référence 20, coopérant avec une membrane déroulante souple en élastomère (non représentée), fixée de façon étanche par son bord périphérique extérieur sur l'enveloppe 10, de façon classique. Le piston 20 comporte une partie arrière tubulaire 22 qui traverse de façon étanche la paroi arrière de l'enveloppe 10. L'étanchéité de cette traversée est assurée par un joint d'étanchéité annulaire armé 24 qui est fixé par une bague 26 dans une partie centrale tubulaire prolongeant vers l'arrière la paroi arrière de l'enveloppe 10. La partie tubulaire 22 se termine vers l'avant par une partie de forme générale approximativement tronconique 28, formant un voile intermédiaire de piston.

L'extrémité avant de plus grand diamètre du voile 28 est solidaire, par exemple par emmanchement à force, d'une partie avant 30 du piston, formant d'une part une jupe 32 en forme de disque, sur le bord périphérique extérieur de laquelle est fixée la membrane déroulante, et d'autre part un moyeu central 34.

Un ressort de compression 36 interposé entre le piston 20 et la paroi avant (non représentée) de l'enveloppe 10 maintient normalement le piston 20 dans une position arrière de repos illustrée sur la Figure 1 dans laquelle la chambre arrière 18 présente son volume minimal et la chambre avant 16 son volume maximal.

La partie centrale du moyeu 34 du piston 20 est cylindrique et est formée avec un alésage étagé 38. Une partie intermédiaire 40 de plus petit diamètre de cet alésage reçoit à coulissement l'extrémité avant 42 d'un plongeur 44 présentant également une symétrie de révolution autour de l'axe X-X', et une partie avant 46 de plus grand diamètre de cet alésage recoit un disque de réaction 48 en un matériau déformable tel qu'un élastomère et l'extrémité arrière 50 d'une tige de poussée 52 destinée à actionner un maître-cylindre (non représenté) fixé à la paroi avant de l'enveloppe 10.

L'extrémité avant d'une tige de commande 54 du servomoteur, disposée également selon l'axe X-X', est montée rotulante dans le plongeur 44. L'extrémité arrière (non représentée) de cette tige 54 qui fait saillie à l'extérieur de la partie tubulaire 22 du piston 20, est commandée directement par la pédale de frein du véhicule (non représentée).

L'espace annulaire 56 délimité entre la tige de commande 54 et la partie tubulaire 22 du piston 20 débouche vers l'atmosphère extérieure à l'arrière du servomoteur, par exemple par l'intermédiaire d'un filtre à air.

Entre la jupe 32 et l'extrémité avant de plus grand diamètre du voile 28 du piston est maintenu de façon étanche un bourrelet 58 formant l'extrémité avant d'une membrane souple 60 de forme générale tronconique. Le bord périphérique intérieur arrière de la membrane 60 est reliée de façon étanche, par exemple par collage, à une pièce 62, présentant une symétrie de révolution par rapport à l'axe X-X', et réalisée en un matériau rigide.

La partie avant 64 de cette pièce 62 présente une face avant annulaire plane perpendiculaire à l'axe X-X', et est solidaire de l'extrémité arrière de la membrane 60, de façon à rigidifier cette dernière.

Un anneau 65 pourra avantageusement être disposé à l'intérieur de l'extrémité avant de plus grand diamètre du voile 28 du piston pour maintenir la membrane souple 60 contre ce dernier et interdire les mouvements radiaux de cette membrane.

La partie arrière 66 de la pièce rigide 62 est tubulaire, et coulisse de façon étanche dans la partie tubulaire arrière 22 du piston 20 grâce à un joint d'étanchéité 68.

Le plongeur 44 est formé avec la partie avant 42 déjà décrite qui coopère avec le disque de réaction 48, et avec une partie arrière 70 coulissant dans l'alésage 38 formé dans la partie centrale du moyeu 34 du piston 20. La partie arrière 70 du plongeur 44 est formée avec une extension 72 s'étendant d'abord radialement vers l'extérieur pour former une partie annulaire 74, puis à partir du bord périphérique extérieur de celle-ci, axialement vers l'avant pour former une partie tubulaire 76.

L'extrémité avant 78 de la partie tubulaire 76 coulisse de façon étanche à l'intérieur du moyeu 34 du piston 20 grâce à un joint d'étanchéité 77.

La membrane souple 60, associée à la pièce tubulaire rigide 62, forme un moyen de valve à trois voies et comporte un premier élément de clapet circulaire 80 formé par un bourrelet élastique disposé sur un épaulement radial de la partie arrière 66 de la pièce rigide 62, et un second élément de clapet circulaire 82 formé par un bourrelet élastique disposé sur la face avant annulaire plane de la partie avant 64 de la pièce rigide 62. Le bourrelet 82 pourra avantageusement, comme on l'a représenté, être venu de matière avec la membrane souple 60. Le premier élément de clapet 80 coopère avec un premier siège de valve 44a formé sur un épaulement radial de la partie tubulaire 76 du plongeur 44. Le second élément de clapet 82 coopère avec un second siège de valve 20a formé sur une face annulaire plane dirigée vers l'arrière du moyeu 34 du piston 20.

Enfin, un ressort de compression 84 est disposé entre le moyeu 34 du piston 20 et la partie annulaire 74 du plongeur 44 et agit en tant que ressort de rappel de la tige de commande 54, et des ouvertures 86, 88 et 90 sont pratiquées respectivement dans le piston 20, la pièce rigide 62 et le voile 28. Ces ouvertures sont régulièrement réparties autour de l'axe de symétrie du servomoteur, elles sont en nombre égal et ont leurs centres situés dans un même plan.

Des ouvertures seront avantageusement pratiquées dans la partie arrière 70 du plongeur 44, pour mettre à l'atmosphère les logements du ressort 84 et de l'extrémité avant 78 du plongeur 44, jusqu'au joint 77.

Le servomoteur illustré sur la Figure 1 est représenté dans sa position de repos, dans laquelle le piston 20 est ramené dans sa position arrière de repos par le ressort 36 agissant sur la face avant du moyeu 34. Le piston vient alors en butée contre le bourrelet 82 formé sur la face avant annulaire plane de la partie avant 64 de la pièce rigide 62, qui vient elle-même en butée contre la face avant de la partie arrière de l'enveloppe 10. Le second passage de valve 20a-82 entre le siège de valve 20a du piston 20 et l'élément de clapet 82 est alors fermé.

Le plongeur 44 et la tige de commande 54 sont ramenés dans leur position arrière de repos par le ressort de rappel 84. Dans cette position, le plongeur 44 vient en butée, par l'intermédiaire de l'épaulement 44a formant le premier siège de valve, contre le bourrelet 80 formé sur l'épaulement radial de la partie arrière 66 de la pièce rigide 62, elle même déjà en butée contre la face avant de la partie arrière de l'enveloppe 10. Le premier passage de valve 44a-80 entre le siège de valve 44a du plongeur 44 et l'élément de clapet 80 est alors lui-aussi fermé.

Le fonctionnement du servomoteur réalisé conformément à l'invention se déduit aisément des explication qui précèdent.

Le servomoteur étant au repos tel qu'on l'a représenté sur la Figure 1, la chambre avant 16 est en communication avec une source de dépression et est isolée de la chambre arrière 18 par les passages de valve 20a-82 et 44a-80 qui sont tous deux fermés comme on l'a vu plus haut. Un actionnement de la tige de commande 54 a pour effet de faire avancer le plongeur 44 à l'encontre de l'action du ressort 84. Le clapet 82 reste plaqué sur le siège de valve 20a du piston 20 sous l'action du ressort 36, tandis que le siège de valve 44a commence à s'éloigner du clapet 80. De l'air à la pression atmosphérique est donc immédiatement admis dans la chambre arrière par l'espace annulaire 56, l'espace annulaire 92 entre la partie tubulaire 76 du plongeur 44 et la partie tubulaire 22 du piston, le passage de valve 44a-80, les ouvertures 88 formées dans la pièce rigide 62 et enfin les ouvertures 90 dans le voile intermédiaire 28.

On voit donc bien qu'on a réalisé, conformément à un objet de l'invention, un servomoteur dont la course morte est la plus réduite possible puisque la seule course morte du servomoteur de l'invention est celle qui est due à l'élasticité du premier élément de clapet 80 nécessaire pour assurer son étanchéité, mais elle peut être considérée comme négligeable.

On voit aussi que, grâce à l'invention, l'air est admis dans la chambre arrière 18 à travers le passage de valve 44a-80 qui est d'un diamètre plusieurs fois plus grand que dans un servomoteur classique. On a ainsi pu réaliser des passages de valve d'un diamètre supérieur à cinq fois le diamètre d'un passage de valve classique.

Il s'ensuit, dans cet exemple, que la section de passage offerte à l'air est elle aussi multiplié par cinq. On obtient donc bien un servomoteur dont le fonctionnement est silencieux puisqu'une telle section de passage agrandie permet à l'air de circuler sans provoquer de bruits d'aspiration et autres sifflements. Il est bien entendu que la valeur de cinq n'est pas critique, mais a seulement été choisie comme exemple.

Tout autre facteur d'agrandissement du passage de valve par rapport à un servomoteur classique pourra être choisi en fonction du résultat désiré.

Le saut du servomoteur se produit à ce stade de fonctionnement du servomoteur, l'air admis dans la chambre arrière du servomoteur créant une différence de pression entre les deux faces du piston, engendrant une force d'assistance qui tend à déplacer le piston 20 vers l'avant, cette force étant transmise à la tige de poussée 52 par l'épaulement formé entre les deux parties 40 et 46 de l'alésage étagé 38, cet épaulement agissant sur le disque de réaction 48. Il se produit alors une augmentation brusque de la force exercée par la tige de poussée 52 jusqu'à ce que le disque de réaction 48 soit suffisamment déformé pour remplir l'espace qui sépare initialement sa face arrière de la face avant du plongeur 44.

La valeur du saut du servomoteur est ainsi conditionnée par la distance axiale au repos entre la face avant du plongeur 44 et la face arrière du disque de réaction 48. Grâce à la conception particulière du servomoteur selon l'invention, cette valeur peut être facilement ajustée à toute valeur désirée, une fois le servomoteur assemblé. En effet, le plongeur 44 est réalisé en deux parties vissées l'une sur l'autre, grâce à un filetage 94 entre la partie arrière 70 du plongeur 44 et la partie annulaire 74 solidaire de la partie tubulaire 76 du plongeur 44.

On comprend aisément que, une fois le servomoteur totalement assemblé tel qu'il est représenté sur la Figure 1, une rotation relative des parties arrière 70 et annulaire 74, par exemple en en maintenant une fixe tandis que l'on imprime une rotation autour de l'axe X-X' à l'autre à l'aide d'un outil approprié, se transforme en un déplacement en translation de la partie avant 42 par rapport à la partie tubulaire 76. Le plongeur étant au repos en appui sur le clapet 80 formé sur la pièce rigide 62 sur laquelle vient également en appui le piston 20 pour fermer le second passage de valve 20a-82, la rotation relative des parties arrière 70 et annulaire 74 fait donc bien varier la distance entre la face avant du plongeur 44 et la face arrière du disque de réaction 48.

La valeur du saut du servomoteur selon l'invention peut donc être réglée de l'extérieur, de façon simple par tout procédé approprié, appliqué au servomoteur totalement assemblé. On pourra par exemple appliquer sur la tige de poussée 52 un effort correspondant au saut désiré du servomoteur, ce qui provoque une déformation du disque de réaction 48.

Il suffira alors de visser la partie arrière 70 du plongeur dans la partie tubulaire 76 pour faire avancer la face avant du plongeur 44 jusqu'à ce qu'elle vienne en contact de la partie de la surface arrière déformée du disque de réaction 48, contact qu'on peut détecter par tout moyen, par exemple à l'aide d'une jauge de contrainte placée sur la tige de commande 54. En relâchant alors l'effort exercé sur la tige de poussée 52, on aura un servomoteur réglé à la valeur du saut voulue. On pourra également faire fonctionner le servomoteur en l'actionnant par sa tige de commande 54. Des capteurs d'effort sur la tige de commande 54 et la tige de poussée 52 permettront de tracer le diagramme de la force de sortie en fonction de la force d'entrée, et donc d'ajuster le saut du servomoteur à la valeur désirée.

On a donc bien réalisé, conformément à un autre objet de l'invention, un servomoteur dont la valeur du saut peut être ajustée à toute valeur désirée et ce de l'extérieur du servomoteur, et donc sans qu'il soit besoin de le démonter. Ce servomoteur présente une course morte extrêmement réduite, et fonctionne sans bruit.

A la fin de la phase d'actionnement qui a été décrite plus haut, de l'air à la pression atmosphérique est présent dans la chambre arrière 18, et une différentielle de pression s'exerce sur toute la surface de la jupe 32, sauf sur la surface annulaire S comprise entre la circonférence définie par l'anneau 65 et la circonférence correspondant au contact du bourrelet 82 sur le siège 20a du piston 20, la différentielle de pression s'exerçant sur cette surface S de l'ensemble membrane souple 60 - pièce rigide 62 formant clapet.

En choisissant judicieusement la valeur de cette surface S, ainsi que celle de la raideur du ressort 84, l'ensemble piston 20 - clapet 60, 62 va se déplacer sous l'effet de cette différentielle de pression créant une force d'assistance.

On voit donc que, grâce à la conception particulière du servomoteur selon l'invention, le clapet 60, 62 n'est soumis qu'à la seule force dirigée vers l'avant engendrée par la différence des pressions régnant dans la chambre avant 16 et la chambre arrière 18 du servomoteur, qui s'exerce sur la surface annulaire de la membrane 60 et de la pièce rigide 62 située à l'extérieur de la circonférence définie par le second bourrelet 82 coopérant avec le second siège de valve 20a formé sur le piston 20.

On pourra, si on désire confirmer la fermeture du passage de valve 20a - 82, ajouter à la force pneumatique décrite ci-dessus une force mécanique. Une telle force mécanique pourra être engendrée par un ressort prenant appui sur le piston 20 et sollicitant le clapet 60, 62 vers l'avant. On pourra par exemple utiliser une rondelle Belleville ou une rondelle ondulée entre le joint 68 et la face arrière 96 de l'épaulement radial de la partie arrière 66 de la pièce rigide 62 sur la face avant duquel est formé le bourrelet 80, près du bord radialement interne de l'ouverture 90 et/ou entre le voile intermédiaire 28 et la partie avant 64 de la pièce rigide 62, près du bord radialement externe de l'ouverture 90, comme on l'a représenté en traits pointillés sur la Figure 1.

Le déplacement d'ensemble du piston 20 et du clapet 60, 62 a également eu pour effet de ramener le bourrelet 80 porté par la pièce rigide 62 sur le siège de valve 44a du plongeur 44 et ainsi fermer le passage de valve 44a - 80. Toute augmentation ultérieure de l'effort exercé par le conducteur sur la tige de commande 54 fera se réouvrir le passage de valve 44a - 80, pour admettre une quantité supplémentaire d'air à la pression atmosphérique dans la chambre arrière 18, ce qui aura pour effet une augmentation de la force d'assistance exercée sur la tige de poussée 52 et une augmentation de la réaction à la pédale exercée par le disque 48 sur le plongeur 44, alors au contact l'un de l'autre.

Lorsque le conducteur du véhicule désire réduire ou mettre fin à son action de freinage, il diminue son effort sur la pédale de frein. La tige de commande 54 recule alors et entraîne dans son mouvement le plongeur 44, qui vient en butée par sa surface 44a sur le bourrelet 80, en entraînant avec lui le clapet 60, 62. Ce mouvement fait alors perdre le contact entre le bourrelet 82 porté par le clapet 60, 62 et la surface 20a du piston 20, ouvrant ainsi le passage de valve 20a - 82.

L'air contenu dans la chambre arrière 18 est alors aspiré dans la chambre avant 16 par les ouvertures 90 et 88, et le passage de valve 20a, 82. Pour permettre un équilibrage rapide de pression (en l'occurrence de dépression) entre les deux chambres 16 et 18, le passage de valve peut s'ouvrir d'une quantité relativement importante, qui n'est limitée que par la distance D entre le voile 28 et la partie du clapet 60, 62 se trouvant devant lui.

On voit donc que là encore l'air est amené à s'écouler à travers le passage de valve 20a, 82, d'un diamètre nettement supérieur aux passages de valve classiques, permettant à l'aide d'une section de passage importante un débit également supérieur, d'où il résulte un temps de réponse réduit en phase de défreinage.

Enfin, on comprend que la conception particulière du servomoteur selon l'invention permet d'atteindre un des objectifs qu'elle s'était fixé.

En effet, dans toutes les positions du servomoteur, à savoir repos, freinage ou défreinage, le clapet 60, 62 est soumis, par sa partie rigide, à la différence de pressions s'exerçant sur sa surface comprise entre le bourrelet 80 et le joint d'étanchéité 68, sa face extérieure étant exposée à la pression régnant dans la chambre arrière 18, et sa face intérieure étant exposée, à la pression atmosphérique.

De même, dans toutes les positions, le plongeur 44 est soumis à la différence de pressions s'exerçant sur sa surface comprise entre le bourrelet 80 et le joint d'étanchéité 77, sa face extérieure étant exposée à la pression régnant dans la chambre arrière 18 et sa face intérieure étant exposée à la pression atmosphérique.

On comprend donc que si on donne à la partie tubulaire rigide 62 du clapet 60, 62 un diamètre égal ou sensiblement égal à celui du bourrelet 80 coopérant avec le premier siège de valve 44a formé sur le plongeur 44, le clapet 60, 62 ne sera alors soumis à aucune force engendrée par une différence de pression. De même, en donnant à la partie avant tubulaire 78 du plongeur 44 un diamètre égal ou sensiblement égal à celui du bourrelet 80 coopérant avec le premier siège de valve 44a formé sur le plongeur 44, ce dernier ne sera alors soumis à aucune force engendrée par une différence de pression.

Il en résulte une caractéristique très importante du servomoteur selon l'invention, à savoir que, quelles que soient les valeurs de la pression régnant dans la chambre arrière 18 et de la pression atmosphérique, celles-ci ne créeront aucune pression différentielle ni sur le clapet, ni sur le plongeur lorsque les diamètres mentionnés ci-dessus sont égaux. C'est ainsi que l'effort à exercer sur le plongeur pour actionner le servomoteur est égal à celui qu'on exerce sur lui en phase de défreinage. On obtient ainsi un servomoteur où, selon les termes utilisés par l'homme de l'art dans la technique, l'effort d'attaque est égal à l'effort de retour.

C'est cette caractéristique qui permet de réduire très sensiblement la précontrainte du ressort 84. En effet, comme on l'a expliqué en introduction, la présence d'un clapet annulaire en forme de tulipe dans les servomoteurs classiques implique une surface "aspirée" nettement supérieure en phase de repos à celle qui existe en phase de défreinage. C'est pourquoi la précontrainte du ressort de rappel de la tige d'entrée doit être importante, et c'est pourquoi l'effort d'attaque est notablement supérieur à l'effort de retour. Grâce à l'invention, il est maintenant possible de réaliser un servomoteur où la précontrainte du ressort 84 peut être diminuée, avec les conséquences favorables qui en découlent pour l'effort d'attaque.

On notera encore un autre avantage de la constitution tout à fait particulière du servomoteur de l'invention. En effet, on voit que le ressort 84 constitue le ressort de rappel de la tige de commande 54. De plus, étant disposé entre le plongeur 44 et le piston 20, il joue le rôle d'un ressort de clapet.

On voit donc que l'invention permet de réduire le nombre de pièces nécessaires au fonctionnement du servomoteur. Celui-ci n'en sera donc que plus facile à assembler, et donc d'autant moins coûteux et plus fiable.

On conçoit également qu'en donnant au diamètre extérieur de la partie avant tubulaire 78 du plongeur 44 une valeur supérieure ou inférieure au diamètre du bourrelet 80 coopérant avec le premier siège de valve 44a formé sur le plongeur 44, on pourra respectivement diminuer ou augmenter l'effort d'attaque, et que de même en donnant au diamètre extérieur de la partie tubulaire rigide 62 du clapet 60, 62, une valeur supérieure ou inférieure au diamètre du bourrelet 80 coopérant avec le premier siège de valve 44a formé sur le plongeur 44, on pourra de même respectivement diminuer ou augmenter l'effort de retour.

L'effort d'attaque nécessaire à l'actionnement du servomoteur apparaît ainsi uniquement conditionné par la précontrainte au repos du ressort 84. Il s'ensuit que cet effort d'attaque peut être rendu aussi faible qu'on le désire. C'est ainsi qu'on a pu réaliser des servomoteurs dont l'effort d'attaque est inférieur à 1 kg, alors qu'un servomoteur de conception classique est caractérisé par un effort d'attaque toujours supérieur à 5 kg.

Il est ainsi possible, grâce à l'invention, d'obtenir un servomoteur dont l'effort d'attaque soit réglable à toute valeur désirée, aussi faible soit elle. On pourra par exemple prévoir, comme on l'a représenté sur la Figure, de réaliser le plongeur 44 en trois parties, la partie avant 42 et la partie tubulaire 76 déjà décrites, et la partie annulaire 74 sur laquelle porte le ressort de rappel 84. Ces trois parties sont vissées l'une sur l'autre avec des pas de vis égaux.

De la sorte, une fois le servomoteur totalement assemblé, et le saut de ce servomoteur ayant été ajusté à la valeur voulue ainsi qu'on l'a exposé plus haut en imprimant une rotation à la partie arrière 70 du plongeur 44, solidaire de la partie avant 42, par rapport à la partie tubulaire 76, il suffit d'imprimer une rotation à la partie annulaire 74 par rapport aux parties arrière 70 et tubulaire 76 maintenues fixes l'une par rapport à l'autre, pour comprimer plus au moins le ressort 84, et ainsi ajuster l'effort d'attaque à toute valeur désirée.

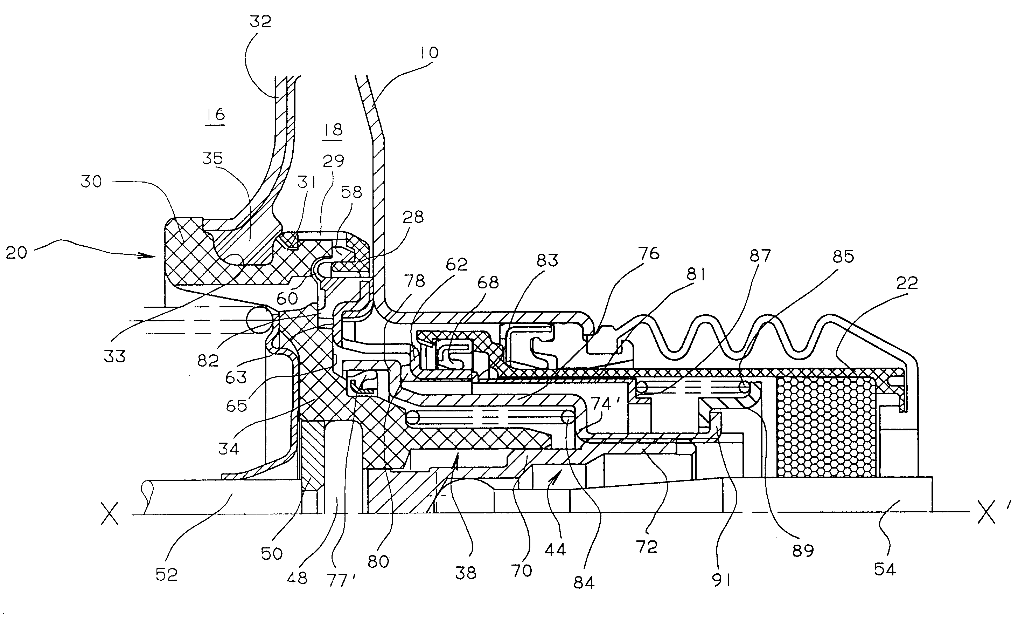

La Figure 2 représente la partie centrale arrière d'un servomoteur réalisé selon une variante du mode de réalisation qui vient d'être décrit. Sur la Figure 2, les éléments identiques ou analogues à ceux de la Figure 1 sont affectés du même signe de référence, éventuellement affectés d'un "prime".

On voit sur la Figure 2 que l'extrémité avant du voile intermédiaire de piston 28 est encliquetée sur la partie avant 30 du piston, grâce à des pattes élastiques 29 portant un bourrelet intérieur coopérant avec une gorge périphérique 31 formée sur le piston 20. La partie avant 30 du piston comporte une autre gorge périphérique 33 qui reçoit le bord périphérique intérieur de la jupe 32 et le bourrelet intérieur 35 de la membrane souple en élastomère, qui maintient avantageusement les pattes 29 dans la gorge 31.

Le voile intermédiaire de piston 28 coopère ainsi avec la face arrière de la partie avant 30 du piston 20 pour maintenir de façon étanche le bourrelet 58 de la membrane souple 60, dont le bord périphérique intérieur arrière est relié de façon étanche à la pièce rigide 62.

La partie avant 64 de la pièce 62 présente une face avant annulaire plane 63 venant, au repos, en butée contre une face annulaire plane 65 de la partie avant 30 du piston.

La partie arrière 70 du plongeur 44, coulissant dans l'alésage 38 du piston 20 est formée avec l'extension arrière 72, solidaire de la partie tubulaire 76 s'étendant axialement vers l'avant, et sur laquelle est formée la partie annulaire 74'.

L'extrémité avant 78 de la partie tubulaire 76 coulisse de façon étanche autour du moyeu 34 du piston 20 grâce à un joint d'étanchéité 77'.

Un manchon 81 est monté coulissant dans la partie tubulaire 22 du piston. Il présente une extrémité avant 83 venant au repos en appui sur l'extrémité arrière de la pièce 62 sous l'action d'un ressort de compression 85 maintenu entre un épaulement radial 87 du manchon 81 et une coupelle 89 en appui sur un épaulement 91 formé à l'extrémité arrière de la partie tubulaire 76.

Le fonctionnement du servomoteur réalisé selon cette variante est totalement conforme à la description qui en a été faite plus haut en référence à la Figure 1 et ne sera donc pas repris en détail. Le ressort 85 présente une précontrainte au repos et une raideur notablement inférieures à celles du ressort 84 et a pour fonction de confirmer la fermeture du passage de valve 20a-82 lors de la phase d'actionnement du servomoteur. Le ressort 85 n'affecte donc pas de façon notable le fonctionnement du servomoteur tel qu'il a été décrit précédemment.

La course morte du servomoteur représenté à la Figure 2 est également la plus réduite possible puisque, là encore, elle correspond à la seule déformation du premier élément de clapet 80.

Le saut du servomoteur représenté sur la Figure 2 peut également être réglé très simplement de l'extérieur après assemblage complet du servomoteur. En effet, à l'aide d'un outil approprié, il est possible d'immobiliser en rotation la partie tubulaire 76, par l'intermédiaire de son épaulement 91. On pourra alors, à l'aide d'un second outil, faire tourner l'extension arrière 72 du plongeur 44, pour augmenter ou diminuer la distance au repos entre la face avant de la partie avant 42 du plongeur 44 et la face arrière du disque de réaction 48, et ainsi respectivement augmenter ou diminuer la valeur du saut du servomoteur.

La disposition du joint 77', selon la variante de la Figure 2, à l'intérieur de la partie avant tubulaire 78 du plongeur 44, permet de réduire sensiblement par rapport au mode de réalisation de la Figure 1, la surface du plongeur soumise à la pression atmosphérique, et donc de diminuer d'autant l'effort d'attaque du servomoteur.

On voit donc bien qu'on a réalisé conformément à la présente invention un servomoteur pneumatique dans lequel les dispositions particulières du siège de valve formé sur le plongeur possédant une partie tubulaire coulissant de façon étanche dans le piston ainsi que de l'élément de clapet formé sur une partie rigide coulissant de façon étanche dans le piston, lui permettent de fonctionner silencieusement, avec des temps de réponse très brefs, un effort d'attaque réduit et une grande fiabilité des moyens de valve. Bien entendu, l'invention n'est pas limitée au mode de réalisation qui a été décrit à titre d'exemple, mais est susceptible de recevoir de nombreuses variantes qui apparaîtront à l'homme du métier.

C'est ainsi par exemple que l'invention pourra être appliquée à des servomoteurs en tandem ou à chambre additionnelle. C'est ainsi également qu'on pourra réaliser la partie tubulaire 76 et la partie annulaire 74, 74' du plongeur en une seule pièce, et pratiquer des ouvertures axiales dans la partie annulaire dans lesquelles pénètrent des doigts d'une pièce coulissant sur la partie arrière 70 du plongeur, ces doigts venant porter sur le ressort 84. Un écrou vissé sur la partie arrière 70 ou sur un prolongement de cette partie fera avancer ou reculer la pièce pourvue de doigts et fera ainsi varier la contrainte au repos du ressort 84, et par conséquent l'effort d'attaque du servomoteur.

## Revendications

1. Servomoteur pneumatique d'assistance au freinage comportant une enveloppe (10) à l'intérieur de laquelle se trouve un piston (20) formé d'un moyeu (34) et d'une jupe (32) et qui définit une chambre avant (16) reliée en permanence à une source de dépression et une chambre arrière (18) reliée sélectivement à la chambre avant (16) ou à l'atmosphère par un moyen de valve (60, 62) actionné par une tige de commande (54) susceptible de s'appuyer, par l'intermédiaire de la face avant d'un plongeur (44) sur la face arrière d'un disque de réaction (48) solidaire d'une tige de poussée (52), un ressort de rappel (84) de la tige de commande (54) étant disposé entre le piston (34) et le plongeur (44), le moyen de valve (60, 62) comportant un clapet coopérant avec un premier siège de valve circulaire (44a) formé sur le plongeur (44) et un second siège de valve circulaire (20a) formé sur le piston (20), le clapet (60,62) comportant une membrane souple (60) fixée de façon étanche par son bord périphérique extérieur au piston (20), caractérisé en ce que la membrane souple (60) est reliée de façon étanche par son bord périphérique intérieur à la partie avant (64) d'une pièce rigide (62), dont la partie tubulaire arrière (66) coulisse de façon étanche dans une partie tubulaire arrière (22) du piston (20).

2. Servomoteur selon la revendication 1, caractérisé en ce que le diamètre extérieur de la partie tubulaire rigide (66) du clapet (60, 62) est sensiblement égal au diamètre d'un premier élément de clapet (80) coopérant avec le premier siège de valve circulaire (44a) formé sur le plongeur (44).

3. Servomoteur selon la revendication 1, caractérisé en ce que le plongeur (44) est formé avec une partie avant tubulaire (78) coopérant en coulissement de façon étanche avec le piston (20).

4. Servomoteur selon la revendication 3, caractérisé en ce que la partie avant tubulaire (78) du plongeur (44) coulisse de façon étanche dans le piston (20), le diamètre extérieur de la partie avant tubulaire (78) du plongeur (44) étant sensiblement égal au diamètre d'un premier élément de clapet (80) coopérant avec le premier siège de valve circulaire (44a) formé sur le plongeur (44).

5. Servomoteur selon les revendications 2 et 4, caractérisé en ce que le diamètre extérieur de la partie avant tubulaire (78) du plongeur (44) est sensiblement égal au diamètre extérieur de la partie tubulaire rigide (66) du clapet (60, 62).

6. Servomoteur selon la revendication 3, caractérisé en ce que la partie avant tubulaire (78) du plongeur (44) coulisse de façon étanche autour du moyeu (34) du piston (20), le diamètre intérieur de la partie avant tubulaire (78) du plongeur (44) étant sensiblement égal au diamètre d'un premier élément de clapet (80) coopérant avec le premier siège de valve circulaire (44a) formé sur le plongeur (44)

7. Servomoteur selon les revendications 2 et 6, caractérisé en ce que le diamètre intérieur de la partie avant tubulaire (78) du plongeur (44) est sensiblement égal au diamètre extérieur de la partie tubulaire rigide (66) du clapet (60, 62).

8. Servomoteur selon la revendication 1, caractérisé en ce que le plongeur (44) comporte une partie avant (42) sur laquelle est formée la face avant du plongeur (44) coopérant avec la face arrière du disque de réaction (48), et une partie avant tubulaire (76) sur laquelle est formé le premier siège de valve circulaire (44a), la partie avant (42) et la partie tubulaire (76) du plongeur (44) étant déplaçables axialement l'une par rapport à l'autre.

9. Servomoteur selon la revendication 8, caractérisé en ce que le plongeur comporte une partie annulaire (74, 74') sur laquelle porte le ressort de rappel (84) de la tige de commande (54), cette partie annulaire (74, 74') étant déplaçable axialement par rapport à la partie avant (42).

10. Servomoteur selon la revendication 9, caractérisé en ce que la partie annulaire (74) est également déplaçable axialement par rapport à la partie tubulaire (76) du plongeur (44).

11. Servomoteur selon la revendication 1, caractérisé en ce que le clapet (60, 62) n'est soumis qu'à la seule force dirigée vers l'avant engendrée par la différence des pressions régnant dans les chambres avant (16) et arrière (18) du servomoteur et s'exerçant sur une surface comprise entre le bord périphérique extérieur de la membrane (60) et la partie (82) coopérant avec le second siège de valve (20a) formé sur le piston (20).

## Claims

1. Pneumatic brake-booster comprising a casing (10) inside which there is a piston (20) formed from a hub (34) and from a skirt (32) and which defines a front chamber (16) permanently connected to a vacuum source and a back chamber (18) selectively connected to the front chamber (16) or to the atmosphere by a valve means (60, 62) actuated by a control rod (54) capable of pressing, by means of the front face of a plunger (44) on the back face of a reaction disk (48) securely fastened to a thrust rod (52), a return spring (84) for the control rod (54) being arranged between the piston (34) and the plunger (44), the valve means (60, 62) comprising a shutter interacting with a first circular valve seat (44a) formed on the plunger (44) and a second circular valve seat (20a) formed on the piston (20), the shutter (60, 62) comprising a flexible membrane (60) fixed in a leaktight manner by its outer peripheral edge to the piston (20), characterized in that the flexible membrane (60) is connected in a leaktight manner by its internal peripheral edge to a rigid tubular part (62) sliding in a leaktight manner in a back tubular part (22) of the piston (20).

2. Booster according to Claim 1, characterized in that the external diameter of the rigid tubular part (62) of the shutter (60, 62) is substantially equal to the diameter of a first shutter element (80) interacting with the first circular valve seat (44a) formed on the plunger (44).

3. Booster according to Claim 1, characterized in that the plunger (44) is formed with a front tubular part (78) interacting by sliding in a leaktight manner with the piston (20).

4. Booster according to Claim 3, characterized in that the tubular front part (78) of the plunger (44) slides in a leaktight manner in the piston (20), the external diameter of the tubular front part (78) of the plunger (44) being substantially equal to the diameter of a first shutter element (80) interacting with the first circular valve seat (44a) formed on the plunger (44).

5. Booster according to Claims 2 and 4, characterized in that the external diameter of the tubular front part (78) of the plunger (44) is substantially equal to the external diameter of the rigid tubular part (62) of the shutter (60, 62).

6. Booster according to Claim 3, characterized in that the tubular front part (78) of the plunger (44) slides in a leaktight manner around the hub (34) of the piston (20), the internal diameter of the tubular front part (78) of the plunger (44) being substantially equal to the diameter of a first shutter element (80) interacting with the first circular valve seat (44a) formed on the plunger (44).

7. Booster according to Claims 2 and 6, characterized in that the internal diameter of the tubular front part (78) of the plunger (44) is substantially equal to the external diameter of the rigid tubular part (62) of the shutter (60, 62).

8. Booster according to Claim 1, characterized in that the plunger (44) comprises a front part (42) on which the front face of the plunger (44) is formed, interacting with the back face of the reaction disk (48), and a tubular front part (76) on which the first circular valve seat (44a) is formed, the front part (42) and the tubular part (76) of the plunger (44) being capable of moving axially with respect to one another.

9. Booster according to Claim 8, characterized in that the plunger comprises an annular part (74, 74') on which the return spring (84) for the control rod (54) bears, this annular part (74, 74') being capable of moving axially with respect to the front part (42).

10. Booster according to Claim 9, characterized in that the annular part (74) is also capable of moving axially with respect to the tubular part (76) of the plunger (44).

11. Booster according to Claim 1, characterized in that the shutter (60, 62) is only subjected to the single force directed forwards generated by the difference in the pressures prevailing in the front (16) and back (18) chambers of the booster and being exerted on a surface lying between the external peripheral edge of the membrane (60) and the part (82) interacting with the second valve seat (20a) formed on the piston (20).

## Patentansprüche

1. Pneumatischer Servomotor zur Bremsunterstützung, mit einem Gehäuse (10), in dessen Innerem sich ein Kolben (20) befindet, der durch eine Nabe (34) und eine Schürze (32) gebildet ist und der eine permanent mit einer Unterdruckquelle verbundene vordere Kammer (16) sowie eine hintere Kammer (18) bildet, die selektiv mit der vorderen Kammer (16) oder der Atmosphäre durch ein Ventilmittel (60, 62) verbunden ist, das durch eine Steuerstange (54) betätigt wird, die sich über die vordere Fläche eines Tauchkolbens (44) an der hinteren Fläche einer fest mit einer Schubstange (52) verbundenen Reaktionsscheibe (48) abstützen kann, wobei eine Feder (84) zum Zurückstellen der Steuerstange (54) zwischen dem Kolben (34) und dem Tauchkolben (44) angeordnet ist, wobei das Ventilmittel (60, 62) ein Ventilteil aufweist, das mit einem an dem Tauchkolben (44) gebildeten ersten kreisförmigen Ventilsitz (44a) sowie einem an dem Kolben (20) gebildeten zweiten kreisförmigen Ventilsitz (20a) zusammenwirkt, wobei das Ventilelement (60, 62) eine nachgiebige Membran (60) aufweist, die mittels ihres Außenumfangsrandes in dichter Weise an dem Kolben (20) befestigt ist, dadurch gekennzeichnet, daß die nachgiebige Membran (60) über ihren Innenumfangsrand in dichter Weise mit dem vorderen Abschnitt (64) eines starren Teils (62) verbunden ist, dessen rohrförmiger hinterer Abschnitt (66) in dichter Weise in einem rohrförmigen hinteren Abschnitt (22) des Kolbens (20) gleitet.

2. Servomotor nach Anspruch 1, dadurch gekennzeichnet, daß der Außendurchmesser des starren rohrförmigen Abschnittes (66) des Ventilelementes (60, 62) im wesentlichen gleich dem Durchmesser eines ersten Ventilelementes (80) ist, das mit dem an dem Tauchkolben (44) gebildeten ersten kreisförmigen Ventilsitz (44a) zusammenwirkt.

3. Servomotor nach Anspruch 1, dadurch gekennzeichnet, daß der Tauchkolben (44) mit einem rohrförmigen vorderen Abschnitt (78) gebildet ist, der in dichter Weise verschiebbar mit dem Kolben (20) zusammenwirkt.

4. Servomotor nach Anspruch 3, dadurch gekennzeichnet, daß der rohrförmige vordere Abschnitt (78) des Tauchkolbens (44) in dichter Weise in dem Kolben (20) gleitet, wobei der Außendurchmesser des rohrförmigen vorderen Abschnittes (78) des Tauchkolbens (44) im wesentlichen gleich dem Durchmesser eines ersten Ventilelementes (80) ist, das mit dem an dem Tauchkolben (44) gebildeten ersten kreisförmigen Ventilsitz (44a) zusammenwirkt.

5. Servomotor nach den Ansprüchen 2 und 4, dadurch gekennzeichnet, daß der Außendurchmesser des rohrförmigen vorderen Abschnittes (78) des Tauchkolbens (44) im wesentlichen gleich dem Außendurchmesser des starren rohrförmigen Abschnittes (66) des Ventilteils (60, 62) ist.

6. Servomotor nach Anspruch 3, dadurch gekennzeichnet, daß der rohrförmige vordere Abschnitt (78) des Tauchkolbens (44) in dichter Weise um die Nabe (34) des Kolbens (20) herum gleitet, wobei der Innendurchmesser des rohrförmigen vorderen Abschnittes (78) des Tauchkolbens (44) im wesentlichen gleich dem Durchmesser eines ersten Ventilelementes (80) ist, das mit dem an dem Tauchkolben (44) gebildeten ersten kreisförmigen Ventilsitz (44a) zusammenwirkt.

7. Servomotor nach den Ansprüchen 2 und 6, dadurch gekennzeichnet, daß der Innnendurchmesser des rohrförmigen vorderen Abschnittes (78) des Tauchkolbens (44) im wesentlichen gleich dem Außendurchmesser des starren rohrförmigen Abschnittes (66) des Ventilteils (60, 62) ist.

8. Servomotor nach Anspruch 1, dadurch gekennzeichnet, daß der Tauchkolben (44) einen vorderen Abschnitt (42) aufweist, auf dem die mit der hinteren Fläche der Reaktionsscheibe (48) zusammenwirkende vordere Fläche des Tauchkolbens (44) gebildet ist, und einen rohrförmigen vorderen Abschnitt (76), auf dem der erste kreisförmige Ventilsitz (44a) gebildet ist, wobei der vordere Abschnitt (42) und der rohrförmige Abschnitt (76) des Tauchkolbens (44) axial relativ zueinander verstellbar sind.

9. Servomotor nach Anspruch 8, dadurch gekennzeichnet, daß der Tauchkolben einen ringförmigen Abschnitt (74, 74') aufweist, an dem die Feder (84) zum Zurückstellen der Steuerstange (54) anliegt, wobei dieser ringförmige Abschnitt (74, 74') axial bezüglich des vorderen Abschnittes (42) verstellbar ist.

10. Servomotor nach Anspruch 9, dadurch gekennzeichnet, daß der ringförmige Abschnitt (74) axial auch bezüglich des rohrförmigen Abschnittes (76) des Tauchkolbens (44) verstellbar ist.

11. Servomotor nach Anspruch 1, dadurch gekennzeichnet, daß das Ventilteil (60, 62) nur der nach vorne gerichteten einen Kraft ausgesetzt ist, die durch die Differenz der in der vorderen Kammer (16) und der hinteren Kammer (18) des Servomotors herrschenden Drücke erzeugt und auf einen Flächenbereich ausgeübt wird, der zwischen dem Außenumfangsrand der Membran (60) und dem Abschnitt (82) enthalten ist, der mit dem an dem Kolben (20) gebildeten zweiten Ventilsitz (20a) zusammenwirkt.
